# EUROPÄISCHE PATENTSCHRIFT

(11) **EP 3 795 535 B1**
(45) Veröffentlichungstag und Bekanntmachung des Hinweises auf die Patenterteilung: **30.10.2024**
(21) Anmeldenummer: 19198349.3
(22) Anmeldetag: 19.09.2019
(51) Int. Cl.: B67D 7/14, B67D 3/00, B67D 7/02

(54) **BEHÄLTERMANAGEMENTSYSTEM**
CONTAINER MANAGEMENT SYSTEM
SYSTÈME DE GESTION DE RÉCIPIENTS

(43) Veröffentlichungstag der Anmeldung: 24.03.2021
(73) Patentinhaber: AS Strömungstechnik GmbH, 73760 Ostfildern (DE)
(72) Erfinder: Szeteli, Andreas, 70794 Filderstadt (DE); Fischer, Nico, 70794 Filderstadt (DE)
(74) Vertreter: Ruckh, Rainer Gerhard

(56) Entgegenhaltungen:
- EP-A1- 2 511 227
- WO-A2-02/100728
- DE-A1- 102012 104 170
- GB-A- 2 550 232
- US-A1- 2011 082 595

## Beschreibung

Die Erfindung betrifft ein Behältermanagementsystem und ein Verfahren zum Betrieb eines Behältermanagementsystems.

Derartige Behältermanagementsysteme umfassen generell eine Anzahl von Behältern, in welchen Flüssigkeiten, insbesondere Chemikalien gelagert sind.

Zur Entnahme von Flüssigkeiten ist es bekannt, automatisch arbeitende Entnahmesysteme einzusetzen.

Ein derartiges Entnahmesystem ist aus der DE 10 2013 109 799 A1 bekannt.

Das dort beschriebene Entnahmesystem dient zum Füllen und Entleeren von Behältern und umfasst einen Behälterverschluss, welcher in eine einen Spundkopf aufnehmende Behälteröffnung eines Behälters eingesetzt ist. Ein mit dem Spundkopf verbundenes Tauchrohr weist ein an das Tauchrohr oder den Spundkopf angeschlossenes Entnahmeanschlusselement auf. Weiterhin ist ein Transpondersignale generierender Transponder vorgesehen, wobei in Abhängigkeit der Transpondersignale ein Überwachungssignal generiert wird, welches angibt, ob ein zulässiger Anschluss des Entnahmeanschlusselements an dem Behälter anliegt.

Damit wird ein verwechslungssicherer Anschluss eines Behälterverschlusses an einen Behälter gewährleistet.

Weiterhin weist das Entnahmesystem eine Steuereinheit auf, welche die Zufuhr von Flüssigkeit zum Behälter und/oder die Entnahme von Flüssigkeit aus dem Behälter in Abhängigkeit des Überwachungssignals des Transponders steuert.

Die mit der Steuereinheit realisierte automatisierte Steuerung erfolgt dabei derart, dass aus einem Behälter nur dann Flüssigkeit entnommen beziehungsweise Flüssigkeit in diesen eingefüllt wird, wenn mit dem Überwachungssignal ein zulässiger Anschluss des Entnahmeanschlusselements an den jeweiligen Behälter gemeldet wird, so dass Fehlzuordnungen sicher vermieden werden.

Die US 2011/0082595 A1 betrifft ein System zur Kalibrierung von Parametern eines chemischen Produkts. Dabei ist dem in einem Behälter oder dergleichen gelagerten Produkt ein Dispenser zugeordnet. Die chemischen Produkte sind mit RFID-Tags gekennzeichnet, deren Inhalte von einem RFID-Lesegerät gelesen werden, das mit dem Dispenser verbunden ist. Dieses System kann über ein Netzwerk, beispielsweise das Internet, gekoppelt sein. Das Netzwerk kann einen Server-Rechner aufweisen, mit dem Kontrollfunktionen ausgeführt werden.

Die WO 02/100728 A2 betrifft ein Handling-System für in Behältern gelagerten Flüssigkeiten. Die Behälter weisen elektronische Speicher in Form von RFID Tags zum Speichern von Daten der Flüssigkeit in diesem Behälter auf. Mittels eines RFID-Antennensystems können diese Daten ausgelesen werden. Die Komponenten des Handling-Systems können in ein firmenweites Netzwerk eingebunden sein, insbesondere zu Zwecken einer Materialverfolgung.

Die DE 10 2012 104 170 A1 betrifft ein Behälterumfüllsystem für das Umfüllen von flüssigen Wirkstoffmitteln, insbesondere Pflanzenschutzmitteln über ein Kupplungssystem aus einem größeren Behälter in einen kleineren Behälter. Das Kupplungssystem ist derart ausgebildet, dass nur Behälter mit den gleichen Wirkstoffmitteln miteinander kuppelbar sind, wobei das Kupplungssystem ein Identifikationssystem aufweist.

Die GB 2550232 A betrifft ein Dispensersystem mit einem Dispenser und mehreren Chemikalien enthaltenden Behälter. Der Dispenser umfasst ein Lesegerät, mit welchem Informationen aus RFID-Tags an den Gehältern ausgelesen werden können.

Der Erfindung liegt die Aufgabe zugrunde ein Behältermanagementsystem mit hoher Funktionalität bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Behältermanagementsystem mit einer Anzahl von Behältern, welchen diese kennzeichnende, elektronisch lesbare Codierungen zugeordnet sind, und mit einer Anzahl von Entnahme-/Befüllstationen, welche ausgebildet sind, um eine Flüssigkeit aus dem Behälter zu entnehmen oder diesen zuzuführen. Den Entnahme-/Befüllstationen sind elektronische Leseeinheiten zugeordnet, mittels der Codierungen von Behältern lesbar sind. Von elektronischen Leseeinheiten sind gelesene Daten einem cloudbasierten Rechnersystem zugeführt, welches zur Speicherung und Auswertung der Daten ausgebildet ist. Mittels des cloudbasierten Rechnersystems werden Steuerbefehle für Entnahme- und/oder Befüllvorgänge abhängig von mittels elektronischen Leseeinheiten übersandten Daten generiert. Die Steuerbefehle werden von dem cloudbasierten Rechnersystem (13) an Steuereinheiten (5) ausgegeben.

Die Erfindung betrifft weiterhin ein Verfahren zum Betrieb eines Behältermanagementsystems.

Ein wesentlicher Vorteil der Erfindung besteht darin, dass mit dem cloudbasierten Rechnersystem eine Kontrolle von verteilten, insbesondere sogar weltweit verteilten Behältersystemen sowie diesen zugeordneten Anlagen zur Entleerung und/oder Befüllung von Behältern ermöglicht wird.

Hierzu können Daten von Behältern, die von elektronischen Leseeinheiten ermittelt und an das cloudbasierte Rechnersystem übertragen werden, in dem cloudbasierten Rechnersystem gespeichert und ausgewertet werden. Vorteilhaft ist das cloudbasierte Rechnersystem auch zur Durchführung von Steuerungs- und Kontrollfunktionen, insbesondere in Abhängigkeit der mit den elektrionschen Leseeinheiten gelesenen Daten, ausgebildet. Die im cloudbasierten Rechnersystem gespeicherten Daten können dabei sowohl von Verbrauchern als auch Lieferanten der in den Behälter gelagerten Flüssigkeiten genutzt werden. Weiterhin können die im cloudbasierten Rechnersystem gespeicherten Daten zur Automatisierung von mit Behältern durchgeführten Arbeitsprozessen genutzt werden. Dabei können im cloudbasierten Rechnersystem insbesondere auch Maßnahmen zur Erhöhung der Fehlersicherheit bei derartigen Arbeitsprozessen durchgeführt werden.

Die Behälter des erfindungsgemäßen Systems sind generell durch eine elektronisch lesbare Codierung eindeutig gekennzeichnet. Dadurch, dass vorzugsweise jede Entnahme-/Befüllstation, mittels dessen Flüssigkeit aus einem Behälter entnehmbar oder diesem zuführbar ist, eine elektronische Leseeinheit zugeordnet ist, die die Codierung des jeweiligen Behälters liest und an das cloudbasierte Rechnersystem übermittelt, kann von dem cloudbasierten Rechnersystem kontrolliert werden, ob dem Behälter die korrekte Entnahme-/Befüllstation zugeordnet ist.

Dabei können die Behälter nahezu beliebig ausgebildet sein. Prinzipiell können die Behälter von Flaschen gebildet sein. Vorteilhaft sind größere Behälter wie Fässer vorgesehen. Im letzteren Fall kann als Anschluss eines Behälters ein Tauchrohr, ein Spund oder eine Kupplung vorgesehen sein. Prinzipiell können die Behälter auch von Tankwagen gebildet sein.

Auch die Entnahme-/Befüllstationen können in beliebigen Ausführungen ausgebildet sein. Insbesondere können die Entnahme-/Befüllstationen in Form von Köpfen ausgebildet sein, die an Anschlüsse von Behältern angeschlossen werden können. Dies ist insbesondere dann vorteilhaft, wenn die Behälter Tauchrohre aufweisen, über welche Flüssigkeit den jeweiligen Behältern entnommen oder diesen zugeführt werden kann. Je nach Anforderung können die Köpfe als Entnahmeköpfe oder Befüllköpfe ausgebildet sein.

Da die elektronischen Codierungen in großer Anzahl vorgegeben werden können, kann das erfindungsgemäße Behältermanagementsystem für eine große Anzahl von Behältern eingesetzt werden, wobei alle Behälter über die Codierungen eindeutig identifiziert werden können.

Die elektronischen Leseeinheiten sind jeweils einer Entnahme-/Befüllstation zugeordnet, wobei diese Zuordnung fest vorgegeben ist und im cloudbasierten Rechnersystem hinterlegt ist. Besonders vorteilhaft kann eine elektronische Leseeinheit fest mit der Entnahme-/Befüllstation verbunden sein, insbesondere dann wenn die Leseeinheit in Form eines Kopfs ausgebildet ist.

Aufgrund dieser Zuordnung und durch Lesen der Codierungen von Behältern kann im cloudbasierten Rechnersystem geprüft und kontrolliert werden, ob ein Behälter an die richtige Entnahme-/Befüllstation angeschlossen ist, das heißt über das cloudbasierte Rechnersystem können Fehlzuordnungen von Behältern und Entnahme-/Befüllstation vermieden werden.

Gemäß einer vorteilhaften Ausführungsform sind die elektronischen Codierungen in jeweils einem Chip abgespeichert, der im Anschluss eines Behälters integriert ist. Insbesondere ist der Chip ein RFID Chip.

Die Chips können eine hohe Speicherkapazität aufweisen und können platzsparend in den Anschlüssen der Behälter integriert werden. Im einfachsten Fall wird ein passiver RFID Chip eingesetzt, in welchem als Codierung nur eine einzige Zahlenfolge abgespeichert ist.

Entsprechend der Ausbildung des Chips als RFID-Chip ist vorteilhaft jede elektronische Leseeinheit eine RFID-Leseeinheit.

Vorteilhaft ist dabei die jeweilige elektronische Leseeinheit der Entnahme-/Befüllstation fest zugeordnet, vorzugsweise im Kopf integriert, wodurch eine eindeutige, unverlierbare Zuordnung der elektronischen Leseeinheit zu dem Kopf gegeben ist.

Weiter vorteilhaft sind in einem Chip eines Behälters Daten des Behälters und/oder Daten einer im Behälter aufgenommenen Flüssigkeit abgespeichert.

Diese Daten sind zusätzlich zu der den Behälter kennzeichnenden Codierung im Chip gespeichert.

Bereits bei der werkseitigen Aktivierung des Chips können in diesem Basis-Daten hinterlegt werden. Hierzu gehören insbesondere Hardware-Daten des Behälters, die zum Beispiel den Anschlusstyp kennzeichnen, insbesondere auch in Form von Artikel-, Serien- oder Bestellnummern.

Diese Basisdaten können durch Behälter-Daten ergänzt werden, die insbesondere Behälter-Spezifikationen umfassen, insbesondere definiert durch Behälter-Artikelnummern oder Behälter-Bestellnummern oder deren verbleibende Lebenszeit.

Die Behälter-Daten können durch Scannen von Barcodes am jeweiligen Behälter mit einem Barcodelesegerät erfasst werden und dann in den Chip eingelesen werden. Auch eine direkte Eingabe der Behälterdaten in dem Chip ist möglicht.

Weiterhin können auch Chemie-Daten, das heißt Daten, die die Flüssigkeit im jeweiligen Behälter kennzeichnen, in den Chip eingespeichert werden, wobei auch hierzu ein Barcodelesegerät verwendet werden kann oder ein direktes Einlesen in der Cloud erfolgt.

Zu diesen Chemie-Daten gehören die chemische Spezifikation der jeweiligen Flüssigkeit, gegebenenfalls deren verbleibende Lebenszeit und auch ein Sicherheits-Datenblatt.

Die Gesamtheit der in den Chips enthaltenen Daten kann von einer zugeordneten elektronischen Leseeinheit ausgelesen und an das cloudbasierte Rechnersystem übertragen werden.

Gemäß einer vorteilhaften Konfiguration des Behältermanagementsystems sind elektronische Leseeinheiten einzeln oder in Gruppen an ein Schnittstelleneinheit angeschlossen, welche über eine berührungslos arbeitende Datenübertragungseinheit mit dem cloudbasierten Rechnersystem verbunden ist.

Vorteilhaft ist an eine Schnittstelleneinheit wenigstens eine Steuereinheit angeschlossen, mittels derer Entnahme- und/oder Befüllvorgänge von Behältern steuerbar sind.

Generell ist es auch möglich eine elektronische Leseeinheit und eine Schnittstelleneinheit zu einer Baueinheit zusammenzufassen. Die elektronische Leseeinheit kann beispielsweise mit einem Kabel und einer Spule beweglich mit der Schnittstelleneinheit verbunden sein. Die gesamte Elektronik beider Einheiten kann in der Schnittstelleneinheit integriert sein.

Die Schnittstelleneinheiten sind von Gateways gebildet, die über leitungsgebundene und/oder berührungslos arbeitende Datenverbindungen an die elektronische Leseeinheiten und die Steuereinheiten angeschlossen sind.

Die Verbindung der Schnittstelleneinheiten mit dem cloudbasierten Rechnersystem erfolgt vorteilhaft über berührungslos arbeitende Datenübertragungseinheiten, da die Schnittstelleinheiten und das cloudbasierte Rechnersystem verteilte Einheiten bilden. Auch leitungsgebundene Datenübertragungen in einem Firmennetzwerk, das mit dem Internet verbunden ist, sind möglich.

Vorteilhaft erfolgt die Anbindung über Internet-Verbindungen, wobei vorzugsweise hierzu sichere Datenübertragungen eingesetzt werden.

Erfindungsgemäß werden mittels des cloudbasierten Rechnersystems Steuerbefehle für Entnahme- und/oder Befüllvorgänge abhängig von mittels elektronischen Leseeinheiten übersandten Daten generiert.

Damit werden Entnahme- und Befüllungsvorgänge von allen Behältern des Gesamtsystems über das cloudbasierte Rechnersystem gesteuert.

Die Steuerung erfolgt derart, dass die Steuerbefehle von dem cloudbasierten Rechnersystem an Steuereinheiten ausgegeben werden.

Mit den Steuerbefehlen gibt das cloudbasierte Rechnersystem genau vor, wie die Steuereinheiten die einzelnen Steuervorgänge, insbesondere Entnahme- und Befüllungsvorgänge von Behältern steuern.

Damit wird vom cloudbasierten Rechnersystem die Funktionalität aller Steuereinheiten genau vorgegeben und überwacht.

Besonders vorteilhaft wird auf eine von einer elektronischen Leseeinheit gelesenen gültigen Codierung eines Behälters und deren Übertragung an das cloudbasierte Rechnersystem in diesem als Steuerbefehl ein Freigabesignal für einen Entnahme- oder Befüllungsvorgang für diesen Behälter generiert.

Durch diese Art der Steuerung werden fehlerhafte Zuordnungen von Entnahme-Befüllstation zu Behältern unterbunden.

Gemäß einer vorteilhaften Ausführungsform der Erfindung werden anhand von Daten der Leseeinheiten im cloudbasierten Rechnersystem Statusmeldungen für Behälter generiert.

Insbesondere werden als Statusmeldungen Befüllungsgrade von Behältern, Positionen von Behältern oder Fehlerzustände für Behälter generiert.

Damit wird im cloudbasierten Rechnersystem zeitabhängig, vorzugsweise in Echtzeit der aktuelle Status aller Behälter des Behältermanagementsystems erfasst und kann zu Kontrollzwecken von Benutzern des cloudbasierten Rechnersystems verfolgt werden.

Anhand des festgestellten Status der Behälter im Gesamtsystem kann im cloudbasierten Rechnersystem auch ein Dokumentenmanagement durchgeführt werden. Mit der Lieferung von in Behältern gelagerten Flüssigkeiten, insbesondere Chemikalien müssen auch geeignete Dokumentationen erstellt und bereitgestellt werden. Hierzu gehören Analyse-Zertifikate, Spezifikationen und auch Sicherheitsdatenblätter. All diese Dokumente werden im cloudbasierten Rechnersystem verwaltet.

Auch können als Dokumentationen aktuelle Statusberichte über den Zustand der Behälter erzeugt werden.

Durch die fortlaufende Erfassung aller Behälter und darin gelagerter Flüssigkeiten im cloudbasierten Rechnersystem ist darüber hinaus eine komplette Rückverfolgbarkeit dieser Produkte gewährleistet.

Hierbei ist es insbesondere vorteilhaft, dass mit dem cloudbasierten Rechnersystem die aktuellen Positionen der einzelnen Behälter verfolgt werden. Die aktuellen Positionen können in die einzelnen Chips der Behälter und in der Cloud eingespeichert werden. Besonders vorteilhaft ist hierzu jedem Chip ein GPS Empfänger zugeordnet.

Weiterhin kann erfasst werden, wann und wo Behälter befüllt oder entleert werden. Insbesondere kann erfasst werden, wie lange ein Behälter an eine Entnahme-/Befüllstation angeschlossen ist. Mittels selbstlernender Algorithmen kann bestimmt werden, wann ein Behälter entleert sein wird und wann der nächste Behälter an die Entnahme-/Befüllstation angeliefert werden muss. Mittels Blockchain-Technologien kann zudem eine manipulationssichere Erfassung erfolgen, was für sicherheitskritische Anwendungen in den Bereichen Pharma, Biopharma und Halbleiter von Bedeutung ist.

Durch die lückenlose Verfolgung der Behälter können über die dem cloudbasierten Rechnersystem zugeführten Daten insbesondere auch Fehlerzustände ermittelt werden.

Auch ist es möglich Entsorgungen von Behältern zu steuern. Damit können Behälter direkt am Standort abgeholt werden und müssen nicht mehr zum Chemielieferanten zurücktransportiert werden.

So kann im cloudbasierten Rechnersystem ermittelt werden, ob die Lebenszeit von Flüssigkeiten in Behältern oder der Behälter selbst überschritten ist. Auch können Fehllieferungen von Behältern erkannt werden. Auch kann erkannt werden, wenn Behälter an falsche Köpfe angeschlossen werden.

Für den Fall, dass in Behältern verunreinigte oder nicht konforme Chemikalien festgestellt werden, kann um Schäden oder Gefahren für Personen zu vermeiden, in dem cloudbasierten Rechnersystem ein Sperrsignal, das heißt eine Sperrung des jeweiligen Behälters ausgelöst werden. Diese Sperrung kann in Echtzeit durchgeführt werden, insbesondere derart, dass ein Benutzer des cloudbasierten Rechnersystems den jeweiligen Prozess stoppt, so dass zum Beispiel der jeweilige Behälter nicht mehr entleert werden kann.

Weiterhin kann das cloudbasierte Rechnersystem Warnmeldungen oder allgemein Benachrichtigungen generieren, wenn zum Beispiel ein Behälter falsch einen Kopf angeschlossen ist und nicht befüllt oder entleert werden kann. Auch kann eine Warnmeldung oder Benachrichtigung im cloudbasierten Rechnersystem generiert werden, wenn festgestellt wird, dass die Lebenszeit einer Flüssigkeit in einem Behälter abgelaufen ist. Generell werden derartige Benachrichtigungen oder Warnmeldungen generiert, wenn Störungen im Produktionsablauf des Behälter-Handings aufgedeckt werden. Diese Benachrichtigungen oder Warnmeldungen werden bevorzugt an die geeigneten Adressaten wie Chemikalien-Lieferanten oder Chemikalien-Verbraucher versandt.

Weiterhin können die im cloudbasierten Rechnersystem gesammelten Daten für Produktionsablaufsteuerungen verwendet werden.

So können abhängig von den Daten, wie zum Beispiel Befüllungszuständen von Behältern oder der Anzahl von im Umlauf befindlichen Behältern im cloudbasierten Rechnersystem selbsttätig Beschaffungsprozesse wie Bestellungen von neuen Behältern ausgelöst werden. Weiterhin kann auch die Lagerhaltung von Behältern über das cloudbasierte Rechnersystem gesteuert werden.
- Figur 1:: Schematische Darstellung eines Ausführungsbeispiels des erfin-dungsgemäßen Behältermanagementsystems.
- Figur 2:: Detaildarstellung eines Ausschnitts des Behältermanagementsys-tems gemäß Figur 1.

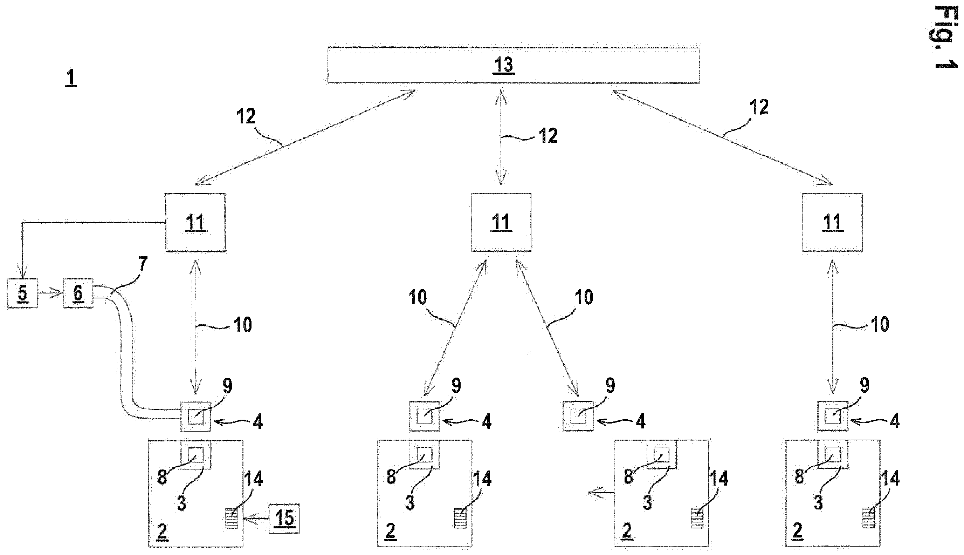

Figur 1 zeigt schematisch ein Ausführungsbeispiel des erfindungsgemäßen Behältermanagementsystems 1.

Das Behältermanagementsystem 1 dient zum automatisierten Handling von Flüssigkeiten, insbesondere Chemikalien enthaltenden Behältern 2. Die Behälter 2 können von Flaschen, Kanistern oder, wie in Figur 1 dargestellt, in Form von Fässern ausgebildet sein.

Jeder Behälter 2 weist einen Anschluss 3 auf, an welchen eine Entnahme-/Befüllstation, im vorliegenden Fall ein Kopf 4 angeschlossen werden kann, über welchen aus dem Behälter 2 Flüssigkeit entnommen werden kann oder diesem zugeführt werden kann. Die Entleerung oder Befüllung des Behälters 2 erfolgt automatisch, wie für den linken Behälter 2 in Figur 1 beispielhaft dargestellt.

Der Kopf 4 ist in diesem Fall als Entnahmekopf ausgebildet. Nach Anschließen des Entnahmekopfs an den Anschluss 3 des Behälters 2 kann über eine Steuereinheit 5 eine Pumpe 6 aktiviert werden, mittels derer über eine Leitung 7 und den Entnahmekopf Flüssigkeit aus dem Behälter 2 abgepumpt wird.

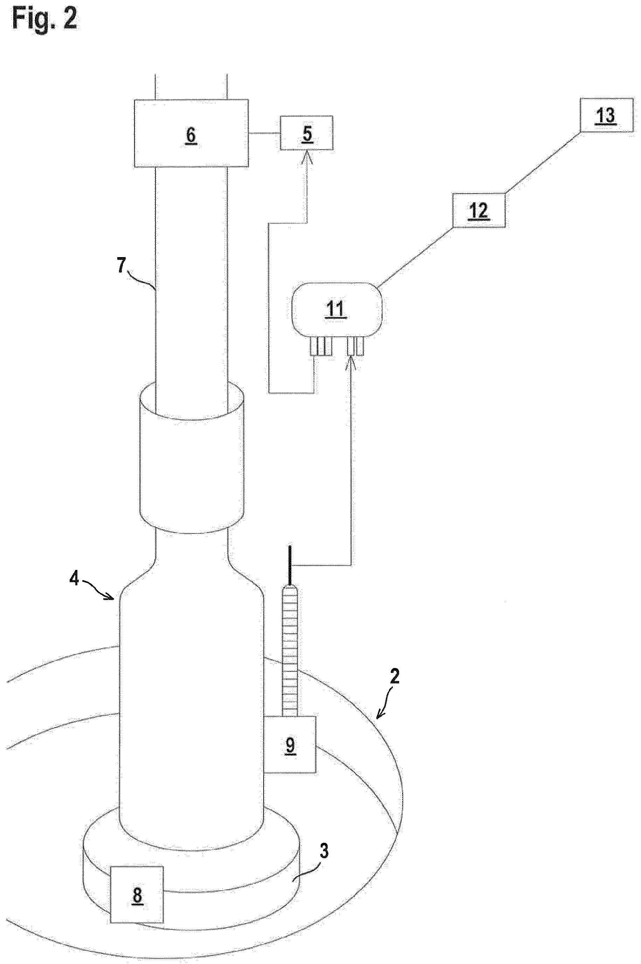

Figur 1 zeigt eine Mehrfachanordnung von Behältern 2, die verteilt an unterschiedlichen Orten angeordnet sein können. Die Mehrfachanordnung kann auch eine erheblich größere Anzahl von Köpfen 4 und Behältern 2, wie in Figur 2 dargestellt, umfassen. Jeder Behälter 2 kann an einen Kopf 4 zur Entnahme oder Befüllung mit Flüssigkeit angeschlossen werden. Hierzu können den Köpfen 4 von Steuereinheiten 5 gesteuerte Pumpen 6 zugeordnet sein, wobei auch eine Steuereinheit 5 mehrere Pumpen 6 steuern kann und mehrere Köpfe 4 an eine Pumpe 6 angeschlossen sein können.

Erfindungsgemäß weist jeder Behälter 2, insbesondere in seinem Anschluss 3 einen Chip auf, in welchem eine elektronisch lesbare Codierung gespeichert ist, die den Behälter 2 eindeutig kennzeichnet. Im vorliegenden Fall sind die Chips als RFID-Chips 8 ausgebildet.

In jedem Kopf 4 ist eine elektronische Leseeinheit in Form einer RFID-Leseeinheit 9 integriert. Prinzipiell kann die elektronische Leseeinheit dem Kopf 4 auch ohne physikalische Verbindung räumlich zugeordnet sein. Ist an den Kopf 4 ein Behälter 2 angeschlossen, befindet sich der dort im Anschluss 3 integrierte RFID-Chip 8 im Lesebereich der RFID-Leseeinheit 9, so dass diese die Codierung aus dem RFID-Chip 8 auslesen kann. Der RFID-Chip 8 kann auch am Behälter 2 separat angeordnet sein.

Erfindungsgemäß sind die Köpfe 4 einzeln oder in Gruppen über leitungsgebundene oder berührungslos arbeitende Datenverbindungen 10 an Schnittstelleneinheiten 11 angeschlossen. Auch die Steuereinheiten 5 sind über Datenverbindungen 10 an die Schnittstelleneinheiten 11 angeschlossen. Die Schnittstelleneinheiten 11 sind von Gateways ausgebildet, die jeweils über eine Datenübertragungseinheit 12 in Form einer Internetverbindung an ein cloudbasiertes Rechnersystem 13 angeschlossen sind. Das cloudbasierte Rechnersystem 13 weist eine verteilte Anordnung von Rechnereinheiten in Form von Prozessrechnern und Webservern auf.

Wie Figur 1 zeigt, sind die einzelnen Behälter 2 mit Barcodes 14 gekennzeichnet. In den Barcodes 14 sind Behälter-Daten, die die Behälter 2 spezifizieren und Chemie-Daten, die die Flüssigkeit im jeweiligen Behälter 2 spezifizieren, codiert. Die in den Barcodes 14 kodierten Daten können mit Barcodelesegeräten 15 gelesen werden.

Figur 2 zeigt eine spezifische konstruktive Ausgestaltung für das Behältermanagementsystem 1 gemäß Figur 1. In Figur 1 ist die Oberseite eines Behälters 2 in Form eines Fasses dargestellt, wobei auf dieser Oberseite ein Anschluss 3 in Form eines Spunds vorgesehen ist. Von diesem Spund mündet ein nicht dargestelltes Tauchrohr aus, das in den Innenraum des Fasses geführt ist.

Auf den Anschluss 3 ist ein Kopf 4 in Form eines Entnahmekopfs aufgesetzt. Zur Fixierung am Anschluss 3 weist der Entnahmekopf einen Schraubverschluss auf.

Im Spund ist ein RFID-Chip 8 integriert. Seitlich am Entnahmekopf ist eine RFID-Leseeinheit 9 befestigt. Die RFID-Leseeinheit 9 ist an ein eine Schnittstelleneinheit 11 bildendes Gateway angeschlossen, das über eine Internetverbindung als Datenübertragungseinheit 12 mit dem cloudbasierten Rechnersystem 13 verbunden ist.

Von dem Entnahmekopf führt eine Leitung 7 zu einer Pumpe 6, die von einer Steuereinheit 5 in Form einer SPS-Steuerung gesteuert wird. Die Steuereinheit 5 ist ebenfalls an das Gateway angeschlossen.

Die Funktionsweise des Behältermanagementsystems 1 ist derart, dass das cloudbasierte Rechnersystem 13 das komplette Behälter-Handling steuert, insbesondere auch mit Köpfen 4 durchzuführende Entnahme- oder Befüllvorgänge von Behältern 2.

Hierzu sind in den RFID-Chip 8 nicht nur die Behälter 2 Codierungen gespeichert. Zudem sind dort Basis-Daten gespeichert, die zum Beispiel den Anschluss 3 des Behälters 2 spezifizieren. Weiterhin sind die Behälter-Daten und Chemie-Daten im jeweiligen RFID-Chip 8 abgespeichert. Hierzu wird der Barcode 14 vom Behälter 2 mit dem Barcodelesegerät 15 gelesen. Die dabei ermittelten Daten werden im RFID-Chip 8 abgespeichert.

Weiterhin kann, beispielsweise durch einen GPS-Empfänger die aktuelle Behälterposition im RFID-Chip 8 oder in der Cloud hinterlegt sein.

Bei Anschließen eines Behälters 2 an einen Kopf 4 liest die RFID-Leseeinheit 9 am Kopf 4 die Daten aus dem RFID-Chip 8 des Behälters 2 aus und übermittelt sie an das cloudbasierte Rechnersystem 13.

Abhängig von allen derartigen an das cloudbasierte Rechnersystem 13 übertragenen Daten erfolgt im cloudbasierten Rechnersystem 13 eine Dokumentation, Kontrolle und auch Steuerung des Behältermanagementsystems 1.

Insbesondere werden mittels des cloudbasierten Rechnersystems 13 Steuerbefehle für Entnahme- und/oder Befüllvorgänge abhängig von mittels elektronischen Leseeinheiten übersandten Daten generiert.

Dabei werden die Steuerbefehle von dem cloudbasierten Rechnersystem 13 an Steuereinheiten 5 ausgegeben.

Insbesondere wird auf eine von einer elektronischen Leseeinheit gelesenen gültigen Codierung eines Behälters 2 und deren Übertragung an das cloudbasierte Rechnersystem 13 in diesem als Steuerbefehl ein Freigabesignal für einen Entnahme- oder Befüllungsvorgang für diesen Behälter 2 generiert.

Auf diese Weise werden alle Entnahme- und Befüllvorgänge von dem cloudbasierten Rechnersystem 13 gesteuert. Insbesondere wird mit dem cloudbasierten Rechnersystem 13 eine richtige Zuordnung von Behältern 2 zu Köpfen 4 kontrolliert.

Weiterhin erfolgt im cloudbasierten Rechnersystem 13 eine Auswertung von Statusmeldungen der Behälter 2. Hierzu gehören deren Positionen, Befüllungsgrade und dergleichen.

Weiterhin werden anhand von Daten der Leseeinheiten im cloudbasierten Rechnersystem 13 Statusmeldungen für Behälter 2 generiert.

Beispielsweise werden als Statusmeldungen Befüllungsgrade an Behältern 2, Positionen von Behältern 2 oder Fehlerzustände für Behälter 2 generiert.

Insbesondere werden in dem cloudbasierten Rechnersystem 13 abhängig von Statusmeldungen Dokumentationen und/oder zeitabhängige Statusberichte erstellt werden.

Desweiteren werden in dem cloudbasierten Rechnersystem 13 abhängig von Statusmeldungen Steuerbefehle und/oder Benachrichtigungen für Beschaffungsprozesse und Lagerhaltungsprozesse generiert.

Schließlich können in dem cloudbasierten Rechnersystem 13 abhängig von Statusmeldungen Sperrsignale oder Warnmeldungen generiert werden.

Mit dem erfindungsgemäßen Behältermanagementsystem wird eine komplette Rückverfolgbarkeit der Behälter (2) ermöglicht. Insbesondere kann erfasst werden, wann und wo Behälter (2) befüllt oder entleert werden. Auch ist eine Erfassung möglich wie lange ein Behälter (2) an eine Entnahme-/Befüllstation angeschlossen war. Auch sind Voraussagen möglich, wann ein Behälter (2) an einer Entnahme-/Befüllstation entleert sein wird und wann der nächste Behälter (2) angeliefert werden muss. Auch ist es möglich, die Entsorgung von Behältern (2) zu steuern.

### Bezugszeichenliste

- (1): Behältermanagementsystem
- (2): Behälter
- (3): Anschluss
- (4): Kopf
- (5): Steuereinheit
- (6): Pumpe
- (7): Leitung
- (8): RFID-Chip
- (9): RFID-Leseeinheit
- (10): Datenverbindung
- (11): Schnittstelleneinheit
- (12): Datenübertragungseinheit
- (13): cloudbasiertes Rechnersystem
- (14): Barcodes
- (15): Barcodelesegerät

## Patentansprüche

1. Behältermanagementsystem (1) mit einer Anzahl von Behältern (2), welchen diese kennzeichnende, elektronisch lesbare Codierungen zugeordnet sind, und mit einer Anzahl von Entnahme-/Befüllstationen, ausgebildet sind, um eine Flüssigkeit aus dem Behälter (2) zu entnehmen oder diesem zuzuführen, **dadurch gekennzeichnet, dass** den Entnahme-/Befüllstationen elektronische Leseeinheiten zugeordnet sind, mittels der Codierungen von Behältern (2) lesbar sind, dass von elektronischen Leseeinheiten gelesene Daten einem cloudbasierten Rechnersystem (13) zugeführt sind, welches zur Speicherung und Auswertung der Daten ausgebildet ist, und dass mittels des cloudbasierten Rechnersystems (13) Steuerbefehle für Entnahme- und/oder Befüllvorgänge abhängig von mittels elektronischen Leseeinheiten übersandten Daten generiert werden, wobei die Steuerbefehle von dem cloudbasierten Rechnersystem (13) an Steuereinheiten (5) ausgegeben werden.

2. Behältermanagementsystem (1) nach Anspruch 1, **dadurch gekennzeichnet, dass** das cloudbasierte Rechnersystem (13) zur Durchführung von Steuerungs- und/oder Kontrollfunktionen ausgebildet ist.

3. Behältermanagementsystem (1) nach einem der Ansprüche 1 oder 2, **dadurch gekennzeichnet, dass** die elektronischen Codierungen in jeweils einem Chip abgespeichert sind, der im Anschluss (3) eines Behälters (2) integriert ist.

4. Behältermanagementsystem (1) nach Anspruch 3, **dadurch gekennzeichnet, dass** der Chip ein RFID Chip ist, und dass jede elektronische Leseeinheit eine RFID-Leseeinheit.

5. Behältermanagementsystem (1) nach einem der Ansprüche 1 - 4, **dadurch gekennzeichnet, dass** in einer Entnahme-/Befüllstation eine elektronische Leseeinheit integriert ist.

6. Behältermanagementsystem (1) nach einem der Ansprüche 3 - 5, **dadurch gekennzeichnet, dass** in einem Chip eines Behälters (2) Daten des Behälters (2) und/oder Daten einer im Behälter (2) aufgenommenen Flüssigkeit abgespeichert sind.

7. Behältermanagementsystem (1) nach einem der Ansprüche 1 - 6, **dadurch gekennzeichnet, dass** eine elektronische Leseeinheit mit einer Schnittstelleneinheit (11) eine Baueinheit bildet, dass elektronische Leseeinheiten einzeln oder in Gruppen an eine Schnittstelleneinheit (11) angeschlossen sind, welche über eine berührungslos arbeitende Datenübertragungseinheit (12) mit dem cloudbasierten Rechnersystem (13) verbunden ist.

8. Behältermanagementsystem (1) nach Anspruch 7, **dadurch gekennzeichnet, dass** an eine Schnittstelleneinheit (11) wenigstens eine Steuereinheit (5) angeschlossen ist, mittels derer Entnahme- und/oder Befüllvorgänge von Behältern (2) steuerbar sind.

9. Behältermanagementsystem (1) nach einem der Ansprüche 1 - 8, **dadurch gekennzeichnet, dass** auf eine von einer elektronischen Leseeinheit gelesenen gültigen Codierung eines Behälters (2) und deren Übertragung an das cloudbasierte Rechnersystem (13) in diesem als Steuerbefehl ein Freigabesignal für einen Entnahme- oder Befüllungsvorgang für diesen Behälter (2) generiert wird.

10. Behältermanagementsystem (1) nach einem der Ansprüche 1 - 9, **dadurch gekennzeichnet, dass** anhand von Daten der elektronische Leseeinheiten im cloudbasierten Rechnersystem (13) Statusmeldungen für Behälter (2) generiert werden.

11. Behältermanagementsystem (1) nach Anspruch 10, **dadurch gekennzeichnet, dass** als Statusmeldungen Befüllungsgrade von Behältern (2), Positionen von Behältern (2) oder Fehlerzustände für Behälter (2) generiert werden und/oder Sperrsignale oder Warnsignale generiert werden.

12. Behältermanagementsystem (1) nach einem der Ansprüche 10 oder 11, **dadurch gekennzeichnet, dass** in dem cloudbasierten Rechnersystem (13) abhängig von Statusmeldungen Steuerbefehle und/oder Benachrichtigungen für Beschaffungsprozesse und Lagerhaltungsprozesse generiert werden.

13. Behältermanagementsystem (1) nach einem der Ansprüche, 10 - 12, **dadurch gekennzeichnet, dass** in dem cloudbasierten Rechnersystem (13) abhängig von Statusmeldungen Dokumentationen und/oder zeitabhängige Statusberichte erstellt werden.

14. Verfahren zum Betrieb eines Behältermanagementsystems (1) mit einer Anzahl von Behältern (2), welchen diese kennzeichnende, elektronisch lesbare Codierungen zugeordnet sind, und mit einer Anzahl von Entnahme-/Befüllstationen, welche jeweils an einen Anschluss (3) eines Behälters (2) anschließbar sind, um eine Flüssigkeit aus dem Behälter (2) zu entnehmen oder diesem zuzuführen, **dadurch gekennzeichnet, dass** den Entnahme-/Befüllstationen elektronische Leseeinheiten zugeordnet sind mittels der Codierungen von Behältern (2) lesbar sind und dass von elektronischen Leseeinheiten gelesene Daten einem cloudbasierten Rechnersystem (13) zugeführt werden, welches zur Speicherung und Auswertung der Daten ausgebildet ist, und dass mittels des cloudbasierten Rechnersystems (13) Steuerbefehle für Entnahme- und/oder Befüllvorgänge abhängig von mittels elektronischen Leseeinheiten übersandten Daten generiert werden, wobei die Steuerbefehle von dem cloudbasierten Rechnersystem (13) an Steuereinheiten (5) ausgegeben werden.

## Claims

1. Container management system (1) with a number of containers (2), to which electrically readable codings characterising these are assigned, and with a number of emptying/filling stations constructed to empty a liquid from the container (2) or feed a liquid thereto, **characterised in that** assigned to the emptying/filling stations are electronic reading units by means of which codings of containers (2) are readable, data read by electronic reading units are fed to a cloud-based computer system (13) configured for storage and evaluation of the data, and control commands for emptying and/or filling processes are generated by means of the cloud-based computer system (13) in dependence on data transmitted by electronic reading units, wherein the control commands are issued by the cloud-based computer system (13) to control units (5).

2. Container management system (1) according to claim 1, **characterised in that** the cloud-based computer system (13) is configured for carrying out controlling and/or checking functions.

3. Container management system (1) according to one of claims 1 and 2, **characterised in that** the electronic codings are each stored in a chip which is integrated in the connection (3) of a container (2).

4. Container management system (1) according to claim 3, **characterised in that** the chip is an RFID chip and that each electronic reading unit is an RFID reading unit.

5. Container management system (1) according to any one of claims 1 to 4, **characterised in that** an electronic reading unit is integrated in an emptying/filling station.

6. Container management system (1) according to any one of claims 3 to 5, **characterised in that** stored in a chip of a container (2) are data of the container (2) and/or data of a liquid received in the container (2).

7. Container management system (1) according to any one of claims 1 to 6, **characterised in that** an electronic reading unit together with an interface unit (11) forms a component unit and electronic reading units are connected individually or in groups with an interface unit (11) which is connected by way of a contactlessly operating data transfer unit (12) with the cloud-based computer system (13).

8. Container management system (1) according to claim 7, **characterised in that** at least one control unit (5) by means of which emptying and/or filling processes of containers (2) are controllable is connected with an interface unit (11).

9. Container management system (1) according to any one of claims 1 to 8, **characterised in that** in response to a valid code, which is read by an electronic reading unit, of a container (2) and transfer thereof to the cloud-based computer system (13) a release signal is generated therein as a control command for an emptying or filling process for this container (2).

10. Container management system (1) according to any one of claims 1 to 9, **characterised in that** status reports for containers (2) are generated in the cloud-based computer system (13) on the basis of data of the electronic reading units.

11. Container management system (1) according to claim 10, **characterised in that** degrees of filling of containers (2), positions of containers (2) or error states for containers (2) are generated as status reports and/or blocking signals or warning signals are generated.

12. Container management system (1) according to one of claims 10 and 11, **characterised in that** control commands and/or notifications for procurement processes and storage processes are generated in the cloud-based computer system (13) in dependence on status reports.

13. Container management system (1) according to any one of claims 10 to 12, **characterised in that** documentations and/or time-dependent status reports are created in the cloud-based computer system (13) in dependence on status reports.

14. Method of operating a container management system (1) with a number of containers (2), to which electronically readable codings characterising these are assigned, and with a number of emptying/filling stations, which are respectively connectible with a connection (3) of the container (2) in order to empty a liquid from the container (2) or feed a liquid thereto, **characterised in that** electronic reading units by means of which codings of containers (2) can be read are assigned to the emptying/filling stations and data read by electronic reading units are fed to a cloud-based computer system (13) configured for storage and evaluation of the data, and control commands for emptying and/or filling processes are generated by means of the cloud-based computer system (13) in dependence on data transmitted by means of electronic reading units, wherein the control commands are issued by the cloud-based computer system (13) to control units (5).

## Revendications

1. Système (1) de gestion de conteneurs comprenant un certain nombre de conteneurs (2) auxquels sont associés des codages qui les caractérisent et peuvent être lus électroniquement, et un certain nombre de postes de prélèvement/emplissage conçus pour prélever un liquide à partir du conteneur (2), ou pour le délivrer à ce dernier, **caractérisé par le fait que** des unités électroniques de lecture, au moyen desquelles des codages de conteneurs (2) peuvent être lus, sont associées aux postes de prélèvement/emplissage ; **par le fait que** des données, lues par des unités électroniques de lecture, sont délivrées à un système informatique (13) à hébergement externalisé, affecté à la mémorisation et à l'évaluation desdites données ; et **par le fait que** des instructions de commande, dévolues à des processus de prélèvement et/ou d'emplissage et tributaires de données transmises au moyen d'unités électroniques de lecture, sont engendrées au moyen du système informatique (13) à hébergement externalisé, lesquelles instructions de commande sont dispensées à des unités de commande (5) par ledit système informatique (13) à hébergement externalisé.

2. Système (1) de gestion de conteneurs, selon la revendication 1, **caractérisé par le fait que** le système informatique (13) à hébergement externalisé est réalisé en vue de l'exécution de fonctions de commande et/ou de contrôle.

3. Système (1) de gestion de conteneurs, selon l'une des revendications 1 ou 2, **caractérisé par le fait que** les codages électroniques sont mémorisés, à chaque fois, dans une puce intégrée dans la bonde (3) d'un conteneur (2).

4. Système (1) de gestion de conteneurs, selon la revendication 3, **caractérisé par le fait que** la puce est une puce RFID ; et **par le fait que** chaque unité électronique de lecture est une unité de lecture RFID.

5. Système (1) de gestion de conteneurs, selon l'une des revendications 1 - 4, **caractérisé par le fait qu'**une unité électronique de lecture est intégrée dans un poste de prélèvement/emplissage.

6. Système (1) de gestion de conteneurs, selon l'une des revendications 3 - 5, **caractérisé par** la mémorisation, dans une puce d'un conteneur (2), de données dudit conteneur (2) et/ou de données d'un liquide renfermé par ledit conteneur (2).

7. Système (1) de gestion de conteneurs, selon l'une des revendications 1 - 6, **caractérisé par le fait qu'**une unité électronique de lecture forme un ensemble structurel unitaire avec une unité d'interface (11) ; et **par le fait que** des unités électroniques de lecture sont connectées, individuellement ou par groupes, à une unité d'interface (11) raccordée, par l'intermédiaire d'une unité (12) de transmission de données fonctionnant sans contact, au système informatique (13) à hébergement externalisé.

8. Système (1) de gestion de conteneurs, selon la revendication 7, **caractérisé par le fait qu'**au moins une unité de commande (5), au moyen de laquelle des processus de prélèvement et/ou d'emplissage de conteneurs (2) peuvent être pilotés, est connectée à une unité d'interface (11).

9. Système (1) de gestion de conteneurs, selon l'une des revendications 1-8, **caractérisé par le fait que**, sur la base d'un codage valable d'un conteneur (2) lu par une unité électronique de lecture, et de la transmission dudit codage au système informatique (13) à hébergement externalisé, il est engendré dans ce dernier, en tant qu'instruction de commande, un signal de validation destiné à un processus de prélèvement ou d'emplissage concernant ce conteneur (2).

10. Système (1) de gestion de conteneurs, selon l'une des revendications 1 - 9, **caractérisé par le fait que** des messages d'état ciblant des conteneurs (2) sont engendrés, dans le système informatique (13) à hébergement externalisé, sur la base de données des unités électroniques de lecture.

11. Système (1) de gestion de conteneurs, selon la revendication 10, **caractérisé par le fait que** des degrés d'emplissage de conteneurs (2), des positionnements de conteneurs (2) ou des conditions défectueuses affectant des conteneurs (2) sont engendré(e)s en tant que messages d'état, et/ou des signaux de blocage ou des signaux d'alerte sont engendrés.

12. Système (1) de gestion de conteneurs, selon l'une des revendications 10 ou 11, **caractérisé par le fait que** des instructions de commande et/ou des notifications ciblant des processus d'approvisionnement et des processus de stockage sont engendrées, dans le système informatique (13) à hébergement externalisé, en fonction de messages d'état.

13. Système (1) de gestion de conteneurs, selon l'une des revendications 10 - 12, **caractérisé par le fait que** des documentations et/ou des rapports d'état à dépendance temporelle sont élaboré(e)s, dans le système informatique (13) à hébergement externalisé, en fonction de messages d'état.

14. Procédé d'exploitation d'un système (1) de gestion de conteneurs comprenant un certain nombre de conteneurs (2) auxquels sont associés des codages qui les caractérisent et peuvent être lus électroniquement, et un certain nombre de postes de prélèvement/emplissage qui peuvent être raccordés, à chaque fois, à une bonde (3) d'un conteneur (2) en vue de prélever un liquide à partir dudit conteneur (2), ou de le délivrer à ce dernier, **caractérisé par le fait que** des unités électroniques de lecture, au moyen desquelles des codages de conteneurs (2) peuvent être lus, sont associées aux postes de prélèvement/emplissage ; **par le fait que** des données, lues par des unités électroniques de lecture, sont délivrées à un système informatique (13) à hébergement externalisé, affecté à la mémorisation et à l'évaluation desdites données ; et **par le fait que** des instructions de commande, dévolues à des processus de prélèvement et/ou d'emplissage et tributaires de données transmises au moyen d'unités électroniques de lecture, sont engendrées au moyen du système informatique (13) à hébergement externalisé, lesquelles instructions de commande sont dispensées à des unités de commande (5) par ledit système informatique (13) à hébergement externalisé.
